Europäisches Patentamt

**(19)** European Patent Office

Office européen des brevets

**(11)** Publication number : **0 412 222 B1**

**(12)** **EUROPEAN PATENT SPECIFICATION**

**(45)** Date of publication of patent specification :
**16.08.95 Bulletin 95/33**

**(51)** Int. Cl.$^6$ : **G11B 5/64**

**(21)** Application number : **89312314.1**

**(22)** Date of filing : **28.11.89**

**(54)** A data storage medium and process for making the same.

**(30)** Priority : **24.07.89 US 383441**

**(43)** Date of publication of application :
**13.02.91 Bulletin 91/07**

**(45)** Publication of the grant of the patent :
**16.08.95 Bulletin 95/33**

**(84)** Designated Contracting States :
**DE FR GB IT**

**(56)** References cited :
EP-A- 0 275 455
EP-A- 0 333 101
JOURNAL OF APPLIED PHYSICS, vol. 57, no. 8, part 2B, April 1985, pages 4037-4039, American Institute of Physics, Woodbury, New York, US; H.J. LEE: "Textureand morphology of sputtered Cr thin films"

**(73)** Proprietor : **SEAGATE TECHNOLOGY INTERNATIONAL**
c/o Maples & Calder,
P.O. Box 309
Georgetown, Grand Cayman Island (KY)

**(72)** Inventor : **Christner, Jodie A.**
5054 Clear Spring Drive
Minnetonka Minnesota 55345 (US)
Inventor : **Ranjan, Rajiv**
4141 Parklawn Avenue
Apartment 215
Edina Minnesota 55435 (US)

**(74)** Representative : **Sturt, Clifford Mark et al**
J. MILLER & CO.
34 Bedford Row
Holborn
London WC1R 4JH (GB)

## Description

This invention relates to data storage media for reading and storing magnetic data, and to processes for making the same.

As data storage media for recording and reading magnetic data, magnetic thin films have gained acceptance and often are preferred over oxide or other particulate media. This is due to favourable magnetic properties of metallic thin films, in particular higher remanence magnetisation, and coercivity. Higher magnetisation levels yield higher amplitude read back signals for a given film thickness. Higher coercivity increases resistance to demagnetisation, for improved long term data storage. Large coercivities also give rise to shorter magnetic transition lengths between data bits, thus increasing maximum storage densities for a given remanence magnetisation and film thickness.

A disadvantage associated with magnetic thin films for longitudinal recording is their relatively high levels of noise, resulting in signal-to-noise ratios less than those of particulate media in spite of the enhanced signal amplitudes. Further, the noise power observed for longitudinally recorded thin films is strongly dependent upon a density of written transitions. A primary cause of noise in thin film media is believed to be inter-granular coupling in dense, generally continuous films, where exchange coupling and magnetostatic inter-actions among neighbouring grains are relatively strong. This causes distortions of the ideal linear transition between recorded data bits to form irregular or zigzag transitions. Such transitions have been observed by Lorentz microscopy, electron holography, and spin polarised scanning electron microscopy.

In contrast to magnetic thin films, oxide media and other particulate media comprise magnetic particles dispersed in a non-magnetic binding material. With individual particles separated from one another, interactions are greatly reduced. Non-uniformity in particle size, clustering of particles, and surface roughness are the principal sources of noise.

Vertically recorded cobalt chromium magnetic media, in contrast to longitudinally recorded media, exhibit relatively low noise. However, vertical recording requires higher write currents and is not practical for most rigid disk applications.

There have been efforts to improve the noise characteristics of thin film media with data recorded in the longitudinal mode. For example, J.I. Lee, in Paper AB-11 presented at the 1987 Intermag Conference, disclosed that cobalt-chromium (CoCr) films (23% chromium by weight) deposited by RF-sputtering, ranged from vertical to isotropic-to-longitudinal orientations, with the CoCr films being approximately 8700 Angstroms (870 nm) thick. The isotropic-to-longitudinal medium, recorded in a longitudinal mode, was found to exhibit low noise behaviour similar to the vertically recorded medium. However, it had a coercivity of 317 oersteds ($3.98 \, \text{Am}^{-1}$) much less than desired values of at least 600 oersteds ($7.53 \, \text{Am}^{-1}$).

Christner et al. ("Low-Noise Metal Medium for High-Density Longitudinal Recording", Journal of Applied Physics, Volume 63, No. 8, April 15, 1988), disclosed that CoCr based ternary thin films deposited on a chromium underlayer exhibited low noise and satisfactory coercivity (1100 oersteds, $13.82 \, \text{Am}^{-1}$). The film included about 15% chromium and up to 10% of a third transition metal element. The grain structure of the film replicated that of the chromium underlayer. The coercivity was found to increase sharply with thickness of the chromium underlayer, up to a thickness of about 2000 Angstroms. Increasing underlayer thickness also was found to improve the magnetic orientation from isotropic to a preferred longitudinal orientation. It was suggested that the low media noise of the cobalt-chromium based ternary alloy was the result of relatively weak inter-actions among grains or other magnetic switching sub-units, due to the separation of the cobalt rich regions from one another by non-magnetic regions rich in chromium. This type of separation has been observed for vertical cobalt-chromium media. For such a system, the very strong but short range exchange inter-actions would be quenched, and the longer range magnetostatic inter-actions would be decreased.

US-A-4,786,564 discloses a method for manufacturing a magnetic disk with a nickel-phosphorus alloy layer on an aluminium substrate, a second nickel-phosphorus layer sputtered upon the first, and a magnetic alloy sputtered upon the second nickel-phosphorus layer. The magnetic alloy is sputtered immediately after sputtering of a previous layer, and is controlled as to the nucleation and growth of the crystalline structure to prevent non-uniformities in the substrate surface from affecting the magnetic characteristics of the magnetic media. The sputtered nickel-phosphorus layer is nearly amorphous and sufficiently thick (e.g. from 5 to 200 nanometers) to prevent non-uniformities in the underlying substrate surface from being transmitted to the magnetic layer.

Further efforts have been directed to improving performance of a metallic recording layer through controlling an underlayer of chromium, although not directed to media noise. For example, Fischer ("Magnetic Properties of Longitudinal Recording Performance of Corrosion-Resistant Alloy Films", Fischer et al., IEEE Transactions on Magnetics, Volume Mag-22, No. 5, September 1986) considers CoCr thin films in comparison to CoCrTa films, particularly as to corrosion resistance and coercivity. Films were sputter deposited in a DC magnetron system, using an argon pressure of 1.3 Pa, (10 millitorr). The films were deposited on a chromium underlayer, and the nature of the underlayer, in particular its thickness, was found to influence coercive force. In particular, coercivity was found to increase to a maximum value at a chromium underlayer thickness of 500 nm, with the CoCrTa films significantly higher in co-ercive force.

Allen ("A Comparison of the Magnetic and Recording Properties of Sputtering Ternary Alloys for High Density Application", Allen et al., IEEE Transactions on Magnetics, Volume Mag-23, No. 1, January 1987) discloses a number of ternary alloys including CoCrTa, CoNiCr, CoCrW and CoNiW, with chromium atomic percentages ranging from 12% to 19%. These alloys were sputter deposited upon a chromium underlayer using a 1.3 Pa (10 millitorr) argon pressure. Coercive force was found enhanced by the third element, and further dependent upon the thickness of the sputtered chromium underlayer.

While the above activity has led to increased understanding of the nature of metallic thin film media utilised for longitudinal recording, there remains the need for a metallic thin film affording the high amplitude read signal and the high coercivity characteristics of present continuous grain structures, but with the further advantage of the relatively low noise level of particulate media.

Therefore, the present invention seeks to provide a data storage medium exhibiting low noise behaviour largely independent of the density of magnetic flux changes; having a coercivity of at least 600 oersteds and a high remanence and magnetisation for a relatively high amplitude read signal, in combination with noise levels characteristic of particulate media; and having a desirably low percentage of the non-magnetic components of the alloy, yet with individual grains sufficiently isolated from adjacent grains to yield low noise behaviour.

According to one aspect of the present invention there is provided a data storage medium for storing magnetically readable data, characterised by including: a substrate having a substantially planar surface; a crystalline underlayer deposited upon said planar surface to a thickness within the range from 20 to 600 um, said underlayer having a substantially uniform crystallographic orientation predetermined to control the orientation of crystals epitaxially grown upon the underlayer, said underlayer being comprised of individual grains having average diameters in the range of from 10 to 100 um; and a crystalline recording layer formed by epitaxial growth of a metallic thin film upon said underlayer, the crystallographic orientation of said recording layer being determined by the crystallographic orientation of said underlayer whereby the axes of the easy magnetisation of the crystals comprising said recording layer are substantially aligned in a plane parallel to said planar surface and comprised of individual grains and continuous inter-connected interstitial regions between adjacent grains whereby each grain is substantially isolated from its adjacent grains in order to reduce significantly exchange coupling inter-actions between neighbouring grains, with the width of any one of said interstitial regions separating adjacent grains being at least three times the crystal lattice constant of the alloy comprising the grains, said recording layer being formed to a thickness in the range of from 30 to about 100 um, said underlayer consisting essentially of at least one of the following elements: chromium, molybdenum, tungsten, bismuth, niobium, tantalum, vanadium and titanium, and said recording layer consisting essentially of one of the following alloys:-

a) cobalt at up to 95 atomic percent, chromium at from 5 to 18 atomic percent, and a third component at from 1 to 20 atomic percent and consisting of at least one of the following elements: tungsten, tantalum, molybdenum, vanadium, niobium, platinum, bismuth, zirconium, and hafnium;

b) cobalt at up to 93 atomic percent, nickel in the range of from 5 to 40 atomic percent and a third component from 2 to 20 atomic percent consisting essentially of at least one of the following elements: chromium, tantalum, tungsten, zirconium and platinum; and

c) cobalt and from 2 to 35 atomic percent of a second component consisting essentially of at least one of the following elements: samarium, yttrium, chromium, nickel, selenium and tungsten.

Collectively, the interstitial regions are preferably in contact with at least 50% of the perimeter of each grain.

According to another aspect of the present invention there is provided a process for forming a longitudinal magnetic recording film on a metallic substrate, characterised by including the steps of: enclosing a substrate having a substantially planar surface, and a target consisting of an underlayer material, within a vacuum deposition chamber in an inert gas atmosphere at a pressure in the range from 1.3 to 13 Pa ( 10 to 100 millitorr), with an initial temperature of said substrate being at most 200 °C and sputter depositing a crystalline underlayer of said underlayer material onto said planar surface at an underlayer deposition rate of at most 5 nm per second, to form a crystalline underlayer having a thickness within the range of from 20 nm. to about 600 nm and providing said substrate, said underlayer and a target consisting of a magnetic recording material, within a vacuum deposition chamber in an inert gas atmosphere at a pressure in the range from . 0.13 to 4 Pa ( 1 to 30 millitorr), to sputter desposit a crystalline recording layer of said magnetic recording material onto said underlayer at a rate of at most 2 nm per second to a thickness within the range of from 30 nm to 100 nm, said recording layer substantially replicating the crystalline structure of said underlayer, said underlayer material consisting substantially of at least one of the following elements: chromium, molybdenum, tungsten, bismuth, niobium, tantalum, vanadium and titanium, and said recording layer consisting essentially of one of the following alloys:-

a) cobalt at up to 95 atomic percent, chromium at from 5 to 18 atomic percent, and a third component at from 1 to 20 atomic percent and consisting of at least one of the following elements: tungsten, tantalum, molybdenum, vanadium, niobium, platinum, bismuth, zirconium, and hafnium;

b) cobalt at up to 93 atomic percent, nickel in the range of from 5 to 40 atomic percent and a third component from 2 to 20 atomic percent consisting essentially of at least one of the following elements: chromium, tantalum, tungsten, zirconium and platinum; and

c) cobalt and from 2 to 35 atomic percent of a second component consisting essentially of at least one of the following elements: samarium, yttrium, chromium, nickel, selenium and tungsten.

The preferred substrate is a disc formed of aluminium, for example, plated with an alloy of nickel and phosphorous. The underlayer preferably consists essentially of chromium, and is deposited to a thickness of about 300 nm by a DC magnetron sputtering process in an inert gas atmosphere at a pressure in the range of from 1.3 to 5.3 Pa (10 millitorr to 40 millitorr). More preferably, the inert gas is argon at a pressure of at least 2 Pa (15 millitorr). The initial temperature of the disc preferably is 100°C or less at the beginning of the sputtering process.

The chromium underlayer is sputter deposited at a higher argon pressure than heretofore thought desirable. The increased argon pressure increases scattering, for more random angular deposition, which leads to a faceted rather than acicular structure due to over-shadowing effects. Secondly, the greater argon pressure decreases the energy of the chromium atoms arriving at the substrate surface, decreasing the surface mobility and resulting in a voided structure. With great argon pressure, the deposition rate decreases, which increases the substrate temperature at the end of deposition, leading to increased surface mobility and that counteracts the previously mentioned effect of higher pressure. However, it has been found that the proper selection of argon pressure, in combination with a sufficiently low beginning substrate temperature, results in the desired voided structure in which individual grains are substantially isolated from one another.

A salient feature of the present invention is that by controlling the micro-structure of the chromium underlayer, the micro-structure of the metallic thin film is likewise controlled. More particularly, the magnetic layer replicates the underlayer micro-structure through epitaxial growth of the crystalline film upon the underlayer. Consequently, the metallic thin film may be deposited based on sputtering conditions that permit higher deposition rates yet would not otherwise yield the desired spatial isolation, for example sputtering at an argon pressure of about 0.13 Pa (about 1 millitor).

In general, magnetic properites of the magnetic thin film recording layers tend to vary with the degree of isolation of individual grains. In particular, the remanence, remanence squareness and coercive squareness all decrease as grain isolation increases. This, of course, has a tendency to reduce the read back amplitudes of data recorded on the recording layer having a given thickness.

However, reduced magnetic coupling also leads to a substantial reduction in media noise, principally the result of grain isolation. With sufficient structural or spatial isolation, recording layers recorded in the longitudinal mode have been found to exhibit a media noise level characteristic of typical particulate media, in that the integrated noise power is virtually independent of the recording density in terms of flux changes per centimetre. As explained below, test results indicate a substantial improvement (from 32 dB to 38 dB) in signal-to-noise ratio in the isolated "quasi-particulate" data storage media compared to conventional data storage media with a continuous, closely packed grain structure. Thus, in accordance with the present invention the signal-to-noise ratio of longitudinally recorded data storage media may be substantially enhanced in spite of somewhat reduced read back signal amplitudes, due to a substantial reduction in media noise.

The invention is illustrated, merely by way of example, in the accompanying drawings, in which:-

Figure 1 is a partial sectional view of a data storage medium constructed according to the present invention;

Figure 2 is an enlarged view of a magnetic thin film of a data storage medium such as that illustrated in Figure 1, but formed according to prior art techniques;

Figure 3 is an enlarged view of the data storage medium illustrated in Figure 1;

Figure 4 is a schematic illustration of vacuum deposition apparatus utilised in forming the data storage medium of Figure 1;

Figures 5 to 9 are SEM photographs of magnified images of data storage media, particularly surfaces of metallic thin films formed by DC magnetron sputtering of underlayers under selectively varied conditions; and

Figure 10 is a plot of media noise power normalised by the signal amplitude as a function of the frequency of the written signal, for the data storage media photographed in Figures 5 to 9.

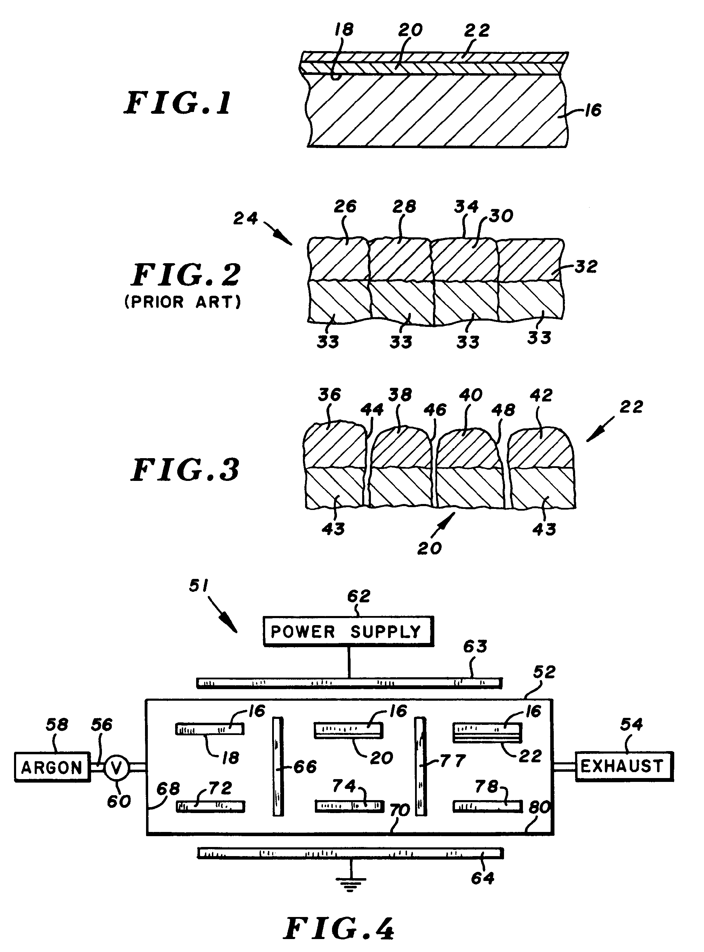

Turning now to the drawings, there is shown in Figure 1 a data storage medium particularly well suited for the longitudinal magnetic recording of data. The medium includes a substrate 16 in the form of a disc constructed of aluminium, plated with an alloy of nickel and phosphorous. Other materials may be utilised for the substrate 16, for example glass, a ceramic material or polyimide material.

The substrate 16 has a substantially planar upper surface 18 upon which is applied an underlayer 20 which provides the base for later application of a magnetic thin film layer 22. The underlayer 20 preferably consists of chromium, although it may be formed, for example, of molybdenum, tungsten, bismuth, niobium, tantalum, vanadium or titanium. Combinations of these elements may be employed, although the use of a single element is preferred. The underlayer 20 preferably is applied utilising a vacuum deposition process, for example DC magnetron sputtering, radio frequency (RF) magnetron sputtering, RF diode sputtering or electron beam evaporation.

The magnetic thin film layer 22 is applied directly upon the underlayer 20, again employing a vacuum deposition process, and preferably without intervening exposure to any reactive gases in order to preserve the subsequent epitaxy. In general, alloys suitable for forming the layer 22 are categorised as follows:

(1) an alloy of cobalt, chromium and a third component (CoCrX) in which cobalt is present at up to 95 atomic percent, the chromium is present at from 5 to 18 atomic percent and X is present at from 1 to 20 atomic percent, where x includes one of the following elements: tungsten, tantalum, molybdenum, vanadium, niobium, platinum, bismuth, zirconium, hafnium, or a combination of two or more of these elements;

(2) cobalt, nickel and a third component (CoNiX) where cobalt is present at up to 93 atomic percent, nickel is present at from 5 to 40 atomic percent and X is present at from 2 to 20 atomic percent, with X being one of the following elements: chromium, tantalum, tungsten, zirconium and platinum; in a particular embodiment X stands for chromium and is present from 2 to 10 atomic percent and

(3) an alloy including cobalt and a second element (CoX) where X is present at from 2 to 35 atomic percent and consists of one of the following elements: samarium, yttrium, chromium, nickel, selenium and tungsten.

Component X in each of these cases may include more than more one of the listed elements. However, as was the case with the underlayer 20, a single element is preferred.

Preferably the alloy used is from one of the first two categories, as ternary alloys have been found to have substantially enhanced coercivity as compared to the third category alloys with only two elements. More particularly, first and second category alloys found particularly desirable include CoCrTa with chromium at about 14 atomic percent and tantalum at about 3 atomic percent, and CoNiCr with nickel at about 25 atomic percent and chromium at about 5 atomic percent. It may be appreciated that dual sided data storage media involves these same layers 20, 22 applied to both sides of the substrate 16.

Figure 2 is a schematic representation of a conventional magnetic thin film layer 24 enlarged sufficiently to shown individuals grains 26, 28, 30, 32 closely packed against one another above chromium grains 33 to form a substantially continuous upper surface 34. This close packed structure is considered desirable for longitudinal recording of magnetic transitions in the layer 24, as it permits recording at a high frequency or density of magnetic flux transitions and yields high amplitude read back signals. This structure, however, usually also results in high noise. The principal cause of noise is believed to be exchange coupling and magnetostatic coupling between adjacent grains. Strong coupling results in distortions of the transition, or zigzag walls, between regions of opposite magnetic orientation and leads to relatively high media noise. The magnetic coupling forces between the adjacent grains can be reduced by increasing the proportion of non-magnetisable constituents in the magnetic thin film, for example by increasing the amount of chromium in a CoNiCr thin film. This, however, yields a film of reduced remanence magnetisation and therefore reduced play back signal amplitude.

Figure 3 is a schematic illustration similar to that of Figure 2, but showing grains 36, 38, 40, 42 of the layer 22, (Figure 1), deposited on the underlayer 20 of chromium including grains 43 to provide a spatial or structural separation of the grains, in the form of voids or interstitial regions 44, 46, 48. Consequently the grains 36 to 42 are separated from one another by the voids, which substantially reduces magnetic coupling forces, especially the short range exchange coupling. This has been found to reduce slightly read back signal amplitudes. More importantly, however, this structure has been found to reduce substantially media noise, thus leading to enhanced signal-to-noise ratios for enhanced readability of longitudinally recorded data.

The grain structure illustrated in Figure 3 is achieved through changes in the vacuum deposition of the underlayer 20 which, as previously mentioned, is preferably chromium. The same vacuum deposition apparatus may be used in applying the underlayer 20 and the layer 22. One preferred example of such vacuum deposition apparatus is schematically illustrated at 51 in Figure 4. The apparatus 51 includes a fluid tight DC magnetron sputtering or plasma chamber 52 in which a plurality of substrates 16 are enclosed, with their upper surfaces 18 facing downwardly. The apparatus further includes an exhaust pump 54 in fluid communication with the chamber 52 for evacuating the chamber when desired. Also in fluid communication with the chamber, through a line 56, is a container 58 for supplying an inert gas, preferably argon, to the chamber. A valve 60 in the line 56 controls the supply of argon to the chamber 52. A power supply 62 biases an electrode 63 with respect to a ground electrode 64 to generate the electrical field necessary to ionize the argon in the chamber 52.

A partition 66 divides the chamber 52 into separate sub-chambers 68, 70. In the sub-chamber 68, a chromium target 72 is positioned in the chamber in spaced apart relation to the most leftward of the substrates 16, facing the surface 18 of the substrate. In the sub-chamber 70, a target 74 of an appropriate magnetic alloy, e.g. cobalt/nickel/chromium is positioned spaced apart from and facing the surface 18 of the centre substrate 16. Preferabaly, the targets 72, 74 are parallel to surfaces 18 of the corresponding substrates 16.

The chamber 52 is utilised to apply both the underlayer 20 and the layer 22 to each of the substrates, due to the need to avoid intervening exposure to any reactive gases, thus to enhance the epitaxial growth of the layer 22, replicating the micro-structure of the underlayer 20. The partition 66 facilitates application of both layers in a single chamber as it prevents cross contamination.

In order to form the underlayer 20 of chromium on the substrate 16, the exhaust pump 54 is actuated to substantially evacuate the chamber 52. Following evacuation, the valve 60 is opened to supply argon to the chamber, until pressure within the chamber reaches a predetermined value, e.g. 1.3 Pa (10 millitorr). At this point, the substrates may be heated as well, if desired. With argon at the desired pressure, target input power at a desired level, for example 4.5 watts per square centimetre, is supplied to the electrode 63 to generate an electrical field and ionize the argon, forming an argon plasma within the chamber. Inter-action of the argon ions with the chromium target 72 generates chromium atoms, a sufficient number of which bombard and become chemically attached to the leftward-most substrate 16, to form the chromium underlayer 20.

Following deposition of the underlayer 20 to a selected thickness, the substrate 16 with its underlayer are transferred from the sub-chamber 68 to the sub-chamber 70. Argon pressure within the chamber 52 is held constant, or adjusted as appropriate if the layer 22 is to be sputtered at a different argon pressure from that during sputtering of the underlayer 20. The power supply 62 is activated to generate the required electrical field once again. In the sub-chamber 70, argon ions interact with the target 74 to generate chromium, nickel and cobalt atoms, which become chemically attached to the underlayer 20 previously desposited onto the substrate 16. Vacuum deposition proceeds until the layer 22 has been formed to a desired thickness.

Finally, a carbon overcoat is applied, directly over the layer 22. For this purpose, a partition 77 is utilised to provide a sub-chamber 80 within the chamber 52, and the substrate 16 is positioned spaced apart from a carbon target 78, so that the layer 22 faces and is parallel to the carbon target.

The properties of the layer 22 are controlled to a substantial degree by controlling the nature of the underlayer 20. In particular, by deposition of a chromium underlayer 20 to form voids or inter-connected interstitial volumetric regions between grains, similar voids are formed between grains in the subsequently applied layer 22. The underlayer 20 and the layer 22 are both highly crystalline, and the crystalline arrangement and orientation in the layer 22 tends to replicate the arrangement and orientation in the underlayer 20, through epitaxial growth.

Thus, an essential feature of the present invention is to form an underlayer in which individual grains are partially or fully isolated from their neighbouring grains. The shape of the grains may be round, polygonal or elongated, and grain sizes can range from 10 to 100 nm in diameter for substantially round grains and from 10 to 200 nm for elongated grains. The thickness of the underlayer 20 can be in the range from about 20 to 600 nm. More preferably, the thickness is within the range of from about 100 to 400 nm, and a highly preferred thickness for the underlayer 20, in particular for a chromium underlayer, is 300 nm.

In general, the desired spatial isolation in the chromium underlayer 20 is the result of careful selection of deposition parameters, in particular the argon pressure, substrate temperature and sputtering rate.

In connection with DC magnetron sputtering, argon pressure should be in the range from 1.3 to 5.3 Pa (10 to 40 millitorr), and preferably should be at least 2 Pa (15 millitorr). Similarly argon pressure ranges preferred for RF magnetron sputtering and RF diode sputtering are 1.3 to 13 Pa, (10 to 100 millitorr) and 1.3 to 4 Pa (10 to 30 millitorr), respectively. For electron beam evaporation, preferred background pressure levels are significantly lower, in the range from $1.3 \times 10^{-3}$ to $1.3 \times 10^{-5}$ Pa ($10^{-2}$ to $10^{-4}$ millitorr).

The desired physical separation between grains is achieved also by deposition at lower rates than previously thought desirable. For example, DC magnetron and RF magnetron sputtering preferably occur at from 1 to 5 nm per second, RF diode/triode sputtering at 0,05 to 1 nm per second, and electron beam evaporation at 1 to 4 nm per second.

The third parameter controlling micro-structure of the chromium underlayer 20 is the temperature of the substrate 16, with lower temperatures preferred. In particular, whilst the substrate may have a temperature up to 200°C at the beginning of deposition, much lower temperatures are preferred, for example, about 100°C or in some cases the complete absence of substrate pre-heating. For the layer 22, deposition conditions are not critical, since the magnetic layer grain structure will replicate that of the underlayer 20. However, preferred ranges are involved with this layer as well.

For example, relatively lower argon pressure is desirable, the preferred range in connection with DC magnetron sputtering being from 0.13 to 1.3 Pa (1 to 10 millitorr). Similar ranges are preferred in connection with RF magnetron and RF diode/triode sputtering, respectively 0.13 to 4 Pa (1 to 30 millitorr) and 0.13 to 1.3 Pa (1 to 10 millitorr). When the magnetic recording layer is applied by electron beam evaporation, substantially the same background pressure is used as with the underlayer, namely $1.3 \times 10^{-3}$ to $1.3 \times 10^{-5}$ Pa ($10^{-2}$ to $10^{-4}$ millitorr).

While an RF or a DC external bias can be used during application of the layer 22, the preferred deposition rates are relatively low, for example from 0,5 to 2 nm per second in connection with DC magnetron sputtering. RF magnetron and RF diode/triode sputtering have similar low preferred deposition ranges, respectively 0,5 to 2 nm and 0.5 to 5 Angstroms per second. The preferred range for electron beam evaporation is 0,1 to 2 nm per second. Regardless of the deposition approach, the preferred thickness of the layer 22 is in the range of 30 to 100 nm, with a particularly preferred thickness in the range of 50 to 70 nm for CoNiCr alloys.

While the deposition parameters discussed above are particularly important in the application of the underlayer 20, it is to be understood that they are provided as guide lines and not necessarily resulting in a particular grain structure. The preferred argon pressure varies with the method of sputtering as noted above, but further is subject to variance depending upon the vacuum deposition equipment involved, as will be appreciated. Preferred values within the suggested ranges can vary with the particular materials selected for the underlayer 20, as well as with the alloy selected for the layer 22. With this in mind, however, it has been found that individual grains of the underlayer, and the layer 22 are sufficiently structurally isolated if the thin film media is comprised of at most 90% grains of the selected alloy, with the interstitial regions or voids comprising the remainder of the surface area, i.e. at least 10%.

To demonstrate the manner in which carefully selected deposition parameters for the chromium underlayer 20 can influence the structure and magnetic properties of the magnetic thin film recording layer, five aluminium/nickel phosphorous substrates were subjected to DC magnetron sputtering, in each case to apply an underlayer 20 of chromium to a thickness of 300 nm, followed by application of a CoNiCr layer 22, to a thickness of 55 nm. The layer 22 included nickel at 25 atomic percent and chromium at 5 atomic percent. The chromium underlayer 20 was applied under the following conditions, with the examples identified as A to E:

Example A: The substrate was pre-heated to a temperature of 100°C, the argon pressure was 0.13 Pa (1 millitorr), and the deposition rate was 5,96 nm per second.

Example B: The substrate was pre-heated to a temperature of 200°C, the argon pressure was 1.2 Pa (9 millitorr), and the deposition rate was 4,04 nm per second.

Example C: The substrate was pre-heated to a temperature of 100°C, the argon pressure was 1.2 Pa (9 millitorr), and the deposition rate was 1,37 nm per second.

Example D: The substrate was not pre-heated, the argon pressure was 2.3 Pa (17 millitorr), and the deposition rate was 3,96 nm per second. Power was increased for a higher deposition rate.

Example E: The substrate was not pre-heated, the argon pressure was 3.3 Pa (25 millitorr), and the deposition rate was 1,37 nm per second.

In each case, the layer 22 was applied immediately after application of the underlayer 20, at an argon pressure of 0.13 Pa (1 millitorr).

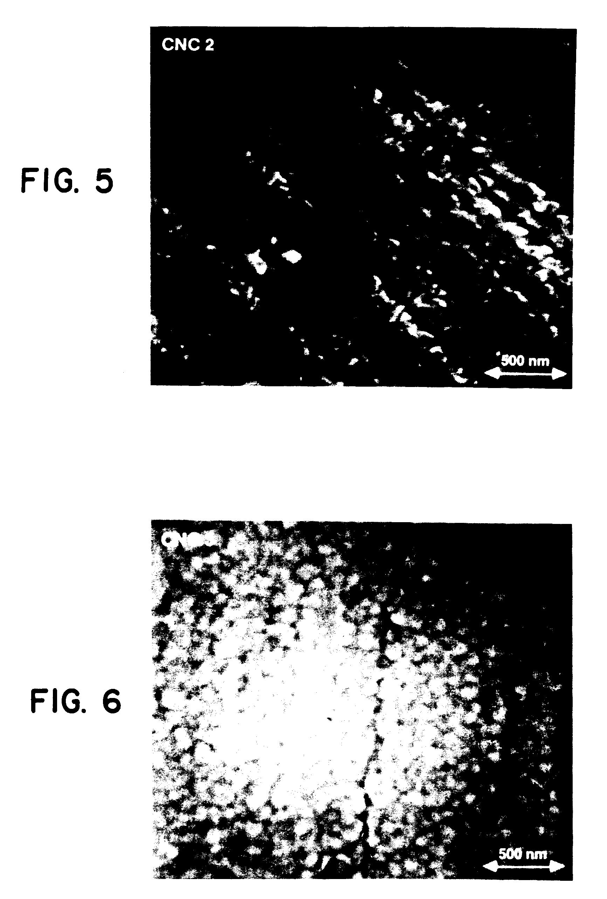

The variations in structure of Examples A to E can be seen from Figures 5 to 9, each being a magnified image (40,000 times to 50,000 times) of the upper surface of the layer 22 obtained using a scanning electron microscope with secondary electron imaging. It should be noted that Examples A to E originally were each provided with a carbon overcoat typically about 300 Angstroms thick for measurement of recording properties. In each case, the carbon coating was removed prior to scanning electron microscope observation, by a low temperature plasma etch in a mixture of argon and oxygen. Based on comparison with samples to which no carbon overcoat had been applied, it has been found that the carbon overcoat can be removed without altering the micro-structure of the magnetic thin film.

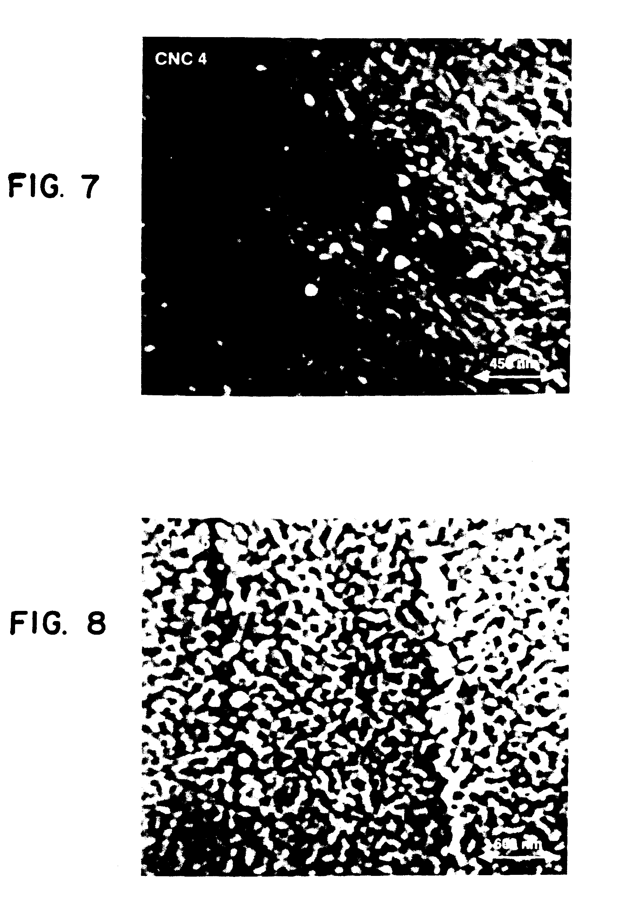

Examination of Figures 5 to 9 reveals differences in micro-structure of the magnetic thin film in Examples A to E. In Example A (Figure 5), individual grains are elongated having a length of about 100 nm and a width or diameter of about 30 nm, and are densely packed. Likewise, the grains in Example B (Figure 6) are densely packed, although individual grains are round, with diameters varying from 75 to 150 nm. The grains of Example C (Figure 7) are elongated, with lengths of about 180 nm and diameters of about 50 nm, and randomly dispersed, for a partial separation between neighbouring grains.

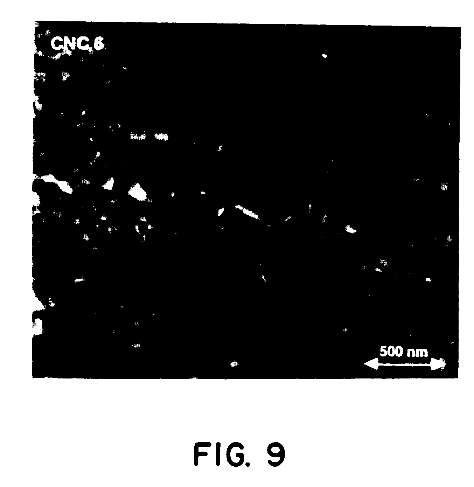

The grains in Example D (Figure 8) are rounded, having an average diameter of about 90 nm, and also appear separated from one another. Similarly, the grains in Example E (Figure 9) are isolated from neighbouring grains, and have average diameters of about 100 nm, although the grains appear to be polygonal in shape rather than rounded.

Examples A to E illustrate the effects of argon pressure and initial substrate temperature upon the micro-structure of the layer 22. First, an increased argon pressure causes random angular deposition due to increased scattering of ions. This results in a faceted rather than acicular structure due to over-shadowing effects. Secondly, increased argon pressure results in less energy of the atoms arriving at the substrate surface. This decreases surface mobility and results in a more voided structure. The deposition rate increases with increasing argon pressure. On the other hand, surface mobility increases with substrate temperature, and higher surface mobility causes more coalescence thus tending toward a more continuous film. The comparison of Examples A and B illustrates this feature.

Magnetic properties of Examples A to E were determined using a vibrating sample magnetometer (VSM), and reveal differences in magnetic behaviour among the examples corresponding to differences in their microstructure, as seen from the following Table:

## TABLE

| Example | Ms. ($emu/cm^3$) | HC (Oe) | S | S* | $V_0$ ($\mu Vp-p$) | SNR (dB) |
|---------|------------------|---------|------|------|---------|----------|
| A | 764 | 900 | 0.81 | 0.82 | 587 | 32.2 |
| B | 879 | 1060 | 0.83 | 0.88 | 599 | 34.8 |
| C | 799 | 1040 | 0.74 | 0.82 | 470 | 36.3 |
| D | 484 | 1000 | 0.72 | 0.68 | 280 | 38.3 |
| E | 824 | 800 | 0.62 | 0.67 | 425 | 38.4 |

The remanence squareness (S) and coercive squareness (S*) both decrease as the degree of grain isolation increases, from Example B (most continuous) to Example E (most isolated). The coercivity ($H_c$) does not appear to be as closely related to grain separation, although Example B does have the highest value while Example E has the lowest. While the relationship between degree of grain isolation and coercivity is not fully understood, it appears that higher argon pressure, and the resulting increase in isolation, also may give rise to low spacing planes, e.g. (220) type and (310) type as opposed to the (110) type orientation preferred to chromium, particularly when provided as an underlayer 20 for a cobalt based layer 22.

The Table also lists results of recording performance studies. In particular the peak-to-peak playback signal amplitude ($V_0$) measured for an all-ones pattern recorded at low density (1000 flux changes per centimetre), (2500 flux changes per inch)), and the signal-to-noise ratio (SNR). The recording head used had a fifteen turn coil, track width of 24 micrometres, a gap length of 0.58 micrometres, and top and bottom pole lengths of 1.27 micrometres and 1.52 micrometres respectively. The flying height of the head was 0.15 micrometres and the relative head-to-medium velocity was 13.9 metres per second. The SNR was computed using $V_0$ divided by 2 and a maximum media noise voltage.

The media noise voltage was obtained as a function of data density as described by N. R. Belk et al. ("Measurement of the Instrinsic Signal-to-Noise Ratio for High-Performance Rigid Recording Media". J. Appl. Phys., Volume 59, No. 2, pages 557 to 563, 1986). Briefly, the method was as follows: First the head and electronics noise level was measured using a spectrum analyser. (The noise was a constant value, independent of frequency). Then an all-ones data pattern was written on the disk at a specified frequency, say $f_0$, and the read back spectrum was taken using the spectrum analyser. In addition to a broad noise envelope, sharp peaks were observed at the data frequency ($f_0$) and its harmonics ($f_0$, $2f_0$, $3f_0$, ...). A computer algorithm was used to smooth the peaks so that only the noise envelope remained. The difference between the total noise power envelope and the head and electronics noise contributions was integrated from 0.5 Hz to 20.5 MHz to obtain the root-mean-square noise voltage.

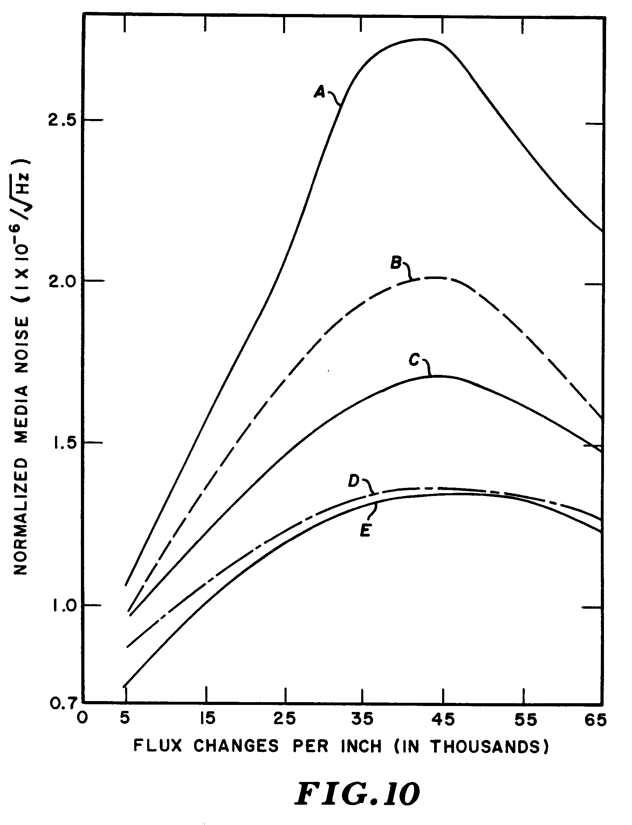

The graph in Figure 10 shows media noise power (normalised by dividing by the low density playback amplitude, $V_0$) as a function of data density in terms of thousands of flux changes per inch. The curve for Example A exhibits behaviour typical of conventional thin film longitudinally recorded media in that the noise level is relatively high and increases sharply with increasing frequency to a peak, in this case at approximately fifteen thousand flux changes per centimetre, (forty thousand flux changes per inch). Examples D and E, in contrast, behave more as typical particulate media; they exhibit significantly lower noise power, and noise power is much less dependent upon frequency.

Returning to the Table, it is clear that signal output, considered alone, is superior in Examples A and B. On the other hand, signal-to-noise ratio increases dramatically, from thirty-two dB in connection with Example A, to over thirty-eight dB for Examples D and E. Thus, deposition of the chromium underlayer, under conditions which cause grain isolation, in the magnetic thin film recording layer, substantially improves magnetic thin film media despite a lower amplitude read-back signal, principally due to substantial reduction in noise.

## Claims

1. A data storage medium for storing magnetically readable data, including: a substrate (16) having a substantially planar surface (18); a crystalline underlayer (20) deposited upon said planar surface to a thickness within the range from 20 to 600 nm, said underlayer having a substantially uniform crystallographic orientation predetermined to control the orientation of crystals epitaxially grown upon the underlayer, said underlayer being comprised of individual grains having average diameters in the range of from 10 to 100 nm; and a crystalline recording layer (22) formed by epitaxial growth of a metallic thin film upon said underlayer (20), the crystallographic orientation of said recording layer being determined by the crystallographic orientation of said underlayer (20) whereby the axes of the easy magnetisation of the crystals comprising said recording layer are substantially aligned in a plane parallel to said planar surface (18) and comprised of individual grains and continuous inter-connected interstitial regions between adjacent grains whereby each grain is spatially isolated from its adjacent grains whereby the exchange coupling interactions between neighbouring grains are reduced, with the width of any one of said interstitial regions separating adjacent grains being at least three times the crystal lattice constant of the alloy comprising the grains, said recording layer being formed to a thickness in the range of from 30 to about 100 nm, said underlayer (20) consisting of at least one of the following elements: chromium, molybdenum, tungsten, bismuth, niobium, tantalum, vanadium and titanium, and said recording layer (22) consisting of one of the following alloys:-

    a) cobalt up to 95 atomic percent, chromium from 5 to 18 atomic percent, and a third component from 1 to 20 atomic percent and consisting of at least one of the following elements: tungsten, tantalum, molybdenum, vanadium, niobium, platinum, bismuth, zirconium, and hafnium;

    b) cobalt up to 93 atomic percent, nickel in the range of from 5 to 40 atomic percent and a third component from 2 to 20 atomic percent consisting of at least one of the following elements: chromium, tantalum, tungsten, zirconium and platinum; and

    c) cobalt and from 2 to 35 atomic percent of a second component consisting of at least one of the following elements: samarium, yttrium, chromium, nickel, selenium and tungsten.

2. A data storage medium as claimed in claim 1 characterised in that the grains of said recording layer comprised at most 90 percent, and preferably at most 80 percent, of said recording layer, with the interstitial regions comprising all of the remainder of said recording layer.

3. A data storage medium as claimed in claim 1 or 2 characterised in that said grains of said recording layer are substantially rounded in shape or substantially polygonal in shape or elongated, having lengths from 10 to 200 nm and widths ranging from 10 to 100 nm.

4. A data storage medium as claimed in any preceding claim characterised in that said recording layer consists of cobalt, nickel and chromium, with said chromium comprising from 2 to 10 atomic percent.

5. A data storage medium as claimed in any preceding claim characterised in that said substrate (16) is constructed of an aluminium alloy.

6. A process for forming a longitudinal magnetic recording film on a substrate, said process including the steps of: enclosing a substrate (16) having a substantially planar surface (18), and a target (72) consisting of an underlayer material, within a vacuum deposition chamber (52) in an inert gas atmosphere at a pressure in the range from 1.3 to 13 Pa (10 to 100 millitorr), with an initial temperature of said substrate being at most 200°C and sputter depositing a crystalline underlayer (20) of said underlayer material onto said planar surface (18) at an underlayer deposition rate of at most 5 nm per second, to form a crystalline underlayer having a thickness within the range of from about 20 nm to about 600 nm; and providing said substrate (16), said underlayer (20) and a target (74) consisting of a magnetic recording material, within a vacuum deposition chamber (52) in an inert gas atmosphere at a pressure in the range from 0.13 to 4 Pa (1 to 30 millitorr), to sputter deposit a crystalline recording layer (22) of said magnetic recording material onto said underlayer at a rate of at most 2 nm per second to a thickness within the range of from 30 nm to 100 nm, said recording layer (22) substantially replicating the crystalline structure of said underlayer (20), said underlayer material (20) consisting substantially of at least one of the following elements: chromium, molybdenum, tungsten, bismuth, niobium, tantalum, vanadium and titanium, and said recording layer (22) consisting of one of the following alloys:-

a) cobalt up to 95 atomic percent, chromium from 5 to 18 atomic percent, and a third component from 1 to 20 atomic percent and consisting of at least one of the following elements: tungsten, tantalum, molybdenum, vanadium, niobium, platinum, bismuth, zirconium, and hafnium;

b) cobalt up to 93 atomic percent, nickel in the range of from 5 to 40 atomic percent and a third component from 2 to 20 atomic percent consisting essentially of at least one of the following elements: chromium, tantalum, tungsten, zirconium and platinum; and

c) cobalt and from 2 to 35 atomic percent of a second component consisting essentially of at least one of the following elements: samarium, yttrium, chromium, nickel, selenium and tungsten.

7. A process as claimed in claim 6 characterised in that said initial temperature of said substrate (16) is at most 100°C.

8. A process as claimed in claim 6 and 7 characterised in that said recording layer (22) consists of cobalt, nickel and chromium, with chromium comprising from 2 to 10 atomic percent of the recording material, said recording layer being deposited to a thickness of 55 nm.

9. A process as claimed in any of claims 6 to 8 characterised in that said inert gas is argon, said step of depositing said underlayer (20) includes DC magnetron sputtering of chromium in an argon atmosphere at a rate of from 1 to 5 nm per second, and said step of depositing the recording layer (22) includes DC magnetron sputtering of the recording layer at a rate of from 0.5 to 2 nm per second.

## Patentansprüche

1. Datenspeichermedium zur Speicherung magnetisch lesbarer Daten, mit: einem Substrat (16), das eine im wesentlichen planare Oberfläche (18) aufweist, einer kristallinen Unterschicht (20), die auf der planaren Oberfläche mit einer Dicke in dem Bereich von 20 bis 600 nm abgeschieden ist, wobei die Unterschicht eine im wesentlichen gleichförmige kristallographische Ausrichtung aufweist, die vorherbestimmt ist, um die Ausrichtung von Kristallen zu steuern, die epitaxial auf der Unterschicht aufgewachsen werden, wobei die Unterschicht aus einzelnen Körnern mit mittleren Durchmessern im Bereich von 10 bis 100 nm besteht; und einer kristallinen Aufzeichnungsschicht (22), die durch epitaxiales Wachsen eines metallischen Dünnfilms auf der Unterschicht (20) gebildet ist, wobei die kristallographische Ausrichtung der Aufzeichnungsschicht durch die kristallographische Ausrichtung der Unterschicht (20) bestimmt ist, wobei die Achsen der leichten Magnetisierbarkeit der die Aufzeichnungsschicht bildenden Kristalle im wesentlichen in einer Ebene parallel zu der planaren Oberfläche ausgerichtet sind und die Schicht aus einzelnen Körnern und kontinuierlichen, miteinander verbundenen Zwischengitterbereichen zwischen benachbarten Körnern besteht, so daß jedes Korm im wesentlichen von seinen benachbarten Körnern isoliert ist, wodurch die Austauschkopplungs-Wechselwirkungen zwischen benachbarten Körnern verringert werden, wobei die Breite irgendeines der Zwischengitterbereiche, der benachbarte Körner trennt, zumindestens dem Dreifachen der Kristallgitterkonstate der die Körner bildenden Legierung entspricht, wobei die Aufzeichnungsschicht mit einer Dicke im Bereich von 30 bis ungefähr 100 nm ausgebildet ist und wobei die Unterschicht (20) aus zumindestens einem der folgenden Elemente besteht: Chrom, Molybdän, Wolfram, Wismut, Niobium, Tantal, Vanadium und Titan, und wobei die Aufzeichnungsschicht im wesentlichen aus einer der folgenden Legierungen besteht:

a) Kobalt mit bis zu 95 Atomprozent, Chrom mit von 5 bis 18 Atomprozent und eine dritte Komponente mit von 1 bis 20 Atomprozent, die aus zumindestens einem der folgenden Elemente besteht: Wolfram, Tantal, Molybdän, Vanadium, Niobium, Platin, Wismut, Zirkon und Hafnium;

b) Kobalt mit bis zu 93 Atomprozent, Nickel im Bereich von 5 bis 40 Atomprozent und eine dritte Komponente von 2 bis 20 Atomprozent, die aus zumindestens einem der folgenden Elemente besteht: Chrom, Tantal, Wolfram, Zirkon und Platin, und

c) Kobalt und von 2 bis 35 Atomprozent einer zweiten Komponente, die aus zumindestens einem der folgenden Elemente besteht: Samarium, Yttrium, Chrom, Nickel, Selen und Wolfram.

2. Datenspeichermedium nach Anspruch 1, dadurch gekennzeichnet, daß die Körner der Aufzeichnungsschicht höchstens 90% und vorzugsweise höchstens 80% der Aufzeichnungsschicht bilden, wobei die Zwischengitterbereiche den gesamten Rest der Aufzeichnungsschicht bilden.

3. Datenspeichermedium nach Anspruch 1 oder 2, dadurch gekennzeichnet, daß die Körner der Aufzeichnungsschicht eine im wesentlichen abgerundete oder eine im wesentlichen vieleckige Form aufweisen oder langgestreckt sind und Längen von 10 bis 200 nm und Breiten aufweisen, die von 10 bis 100 nm reichen.

4. Datenspeichermedium nach einem der vorhergehenden Ansprüche, dadurch gekennzeichnet, daß die Aufzeichnungsschicht aus Kobalt, Nickel und Chrom besteht, wobei das Chrom von 2 bis 10 Atomprozent umfaßt.

5. Datenspeichermedium nach einem der vorhergehenden Ansprüche, dadurch gekennzeichnet, daß das Substrat (16) aus einer Aluminiumlegierung hergestellt ist.

6. Verfahren zur Ausbildung eines Magnetfilms für eine längsgerichtete Aufzeichnung auf einem Substrat, wobei das Verfahren die folgenden Schritte einschließt: Einschließen eines Substrates (16) mit einer im wesentlichen planaren Oberfläche (18) und eines Ziels (72), das aus einem Unterschicht-Material besteht, in einer Vakuumabscheidungskammer (52) in einer inerten Gasatmosphäre mit einem Druck in dem Bereich von 1,3 bis 13 Pa (10 bis 100 Millitorr), wobei eine Anfangstemperatur des Substrates höchstens 200°C beträgt, und Sprühzerstäubungsabscheidung einer kristallinen Unterschicht (20) aus dem Unterschicht-Material auf der planaren Oberfläche (18) mit einer Unterschicht-Abscheidungsrate von höchstens 5 nm pro Sekunde zur Bildung einer kristallinen Unterschicht mit einer Dicke in dem Bereich von ungefähr 20 nm bis ungefähr 600 nm; und Anordnen des Substrates (16), der Unterschicht (20) und eines Ziels (74), das aus einem magnetischen Aufzeichnungsmaterial besteht, in einer Vakuumabscheidungskammer (52) in einer inerten Gasatmosphäre mit einem Druck in dem Bereich von 0,13 bis 4 Pa (1 bis 30 Millitorr) zur Sprühzerstäubungsabscheidung einer kristallinen Aufzeichnungsschicht (20) aus dem magnetischen Aufzeichnungsmaterial auf der Unterschicht mit einer Rate von höchstens 2 nm pro Sekunde bis zu einer Dicke in dem Bereich von 30 nm bis 100 nm, wobei die Auszeichnungsschicht (22) im wesentlichen die kristalline Struktur der Unterschicht (20) wiedergibt und das Unterschicht-Material (20) im wesentlichen aus zumindestens einem der folgenden Elemente besteht: Chrom, Molybdän, Wolfram, Wismut, Niobium, Tantal, Vanadium und Titan, und wobei die Aufzeichnungsschicht (22) aus einem der folgenden Legierungen besteht:

   a) Kobalt mit bis zu 95 Atomprozent, Chrom mit von 5 bis 18 Atomprozent und eine dritte Komponente mit von 1 bis 20 Atomprozent, die zumindestens aus einem der folgenden Elemente besteht: Wolfram, Tantal, Molybdän, Vanadium, Niobium, Platin, Wismut, Zirkon und Hafnium;

   b) Kobalt mit bis zu 93 Atomprozent, Nickel im Bereich von 5 bis 40 Atomprozent und eine dritte Komponente von 2 bis 20 Atomprozent, die im wesentlichen aus zumindestens einem der folgenden Elemente besteht: Chrom, Tantal, Wolfram, Zirkon und Platin; und

   c) Kobalt und von 2 bis 35 Atomprozent einer zweiten Komponente, die im wesentlichen aus zumindestens einem der folgenden Elemente besteht: Samarium, Yttrium, Chrom, Nickel, Selen und Wolfram.

## Revendications

1. Support d'information pour enregistrer des données lisibles magnétiquement, comprenant : un substrat (16) ayant une surface pratiquement plane (18), une sous-couche cristalline (20) déposée sur cette surface plane sous une épaisseur dans l'intervalle de 20 à 600 nm, cette sous-couche ayant une orientation cristallographique pratiquement uniforme déterminée à l'avance pour régler l'orientation des cristaux qui se sont développés épitaxiquement sur la sous-couche, cette sous-couche étant constituée de grains individuels ayant des diamètres moyens dans l'intervalle de 10 à 100 nm ; et une couche d'enregistrement cristalline (22) formée par croissance épitaxique d'un film métallique mince sur cette sous-couche (20), l'orientation cristallographique de cette couche d'enregistrement étant déterminée par l'orientation cristallographique de cette sous-couche (20) de sorte que les axes de magnétisation aisée des cristaux constituant cette couche d'enregistrement sont pratiquement alignés dans un plan parallèle à cette surface plane (18) et constitués de grains individuels et de régions interstitielles interconnectées continues entre les grains adjacents, de sorte que chacun des grains est spatialement isolé des grains adjacents, ce qui réduit les interactions de couplage par échange entre des grains voisins, la largeur de n'importe laquelle de ces régions interstitielles séparant des grains adjacents étant d'au moins trois fois la constante du réseau cristallin de l'alliage constituant les grains, cette couche d'enregistrement étant formée sous une épaisseur dans l'intervalle de 30 à environ 100 nm, cette sous-couche (20) étant constituée d'au moins un des éléments suivants chrome, molybdène, tungstène, bismuth, niobium, tantale, vanadium et titane, et cette couche d'enregistrement (22) étant constituée d'un des alliages suivants :

a) cobalt jusqu'à 95 atomes pour cent, chrome de 5 à 18 atomes pour cent, et un troisième constituant de 1 à 20 atomes pour cent, consistant en au moins un des éléments suivants : tungstène, tantale, molybdène, vanadium, niobium, platine, bismuth, zirconium et hafnium ;

b) cobalt jusqu'à 93 atomes pour cent, nickel dans l'intervalle de 5 à 40 atomes pour cent, et un troisième constituant de 2 à 20 atomes pour cent, consistant en au moins un des éléments suivants : chrome, tantale, tungstène, zirconium et platine ; et

c) cobalt et de 2 à 35 atomes pour cent d'un second constituant consistant en au moins un des éléments suivants : samarium, yttrium, chrome, nickel, sélénium et tungstène.

2. Support d'information selon la revendication 1, caractérisé en ce que les grains de cette couche d'enregistrement constituent au plus 90 pour cent, et de préférence au plus 80 pour cent de cette couche d'enregistrement, les régions interstitielles constituant la totalité du reste de cette couche d'enregistrement.

3. Support d'information selon la revendication 1 ou 2, caractérisé en ce que lesdits grains de cette couche d'enregistrement ont une forme substantiellement arrondie ou substantiellement polygonale ou allongée, en ce qu'ils ont des longueurs de 10 à 200 nm et des largeurs de 10 à 100 nm.

4. Milieu de stockage des données selon l'une quelconque des revendications précédentes, caractérisé en ce que cette couche d'enregistrement est constituée de cobalt, de nickel et de chrome, ce chrome comprenant de 2 à 10 atomes pour cent.

5. Support d'information selon l'une quelconque des revendications précédentes, caractérisé en ce que ce substrat (16) est constitué d'un alliage d'aluminium.

6. Procédé de formation d'un film d'enregistrement magnétique longitudinal sur un substrat, ce procédé comportant les étapes constituant à : enfermer un substrat (16) ayant une surface pratiquement plane (18) et un récepteur (72) constitué d'une matière de sous-couche, dans une chambre de dépôt sous vide (52) en atmosphère de gaz inerte sous une pression dans l'intervalle de 1,3 à 13 Pa (10 à 100 millitorr), la température initiale de ce substrat étant de 200°C au maximum, et à déposer par pulvérisation une sous-couche cristalline (20) de cette matière de sous-couche sur cette surface plane (18) à une vitesse de dépôt de la sous-couche de 5 nm par seconde au maximum, pour former une sous-couche cristalline ayant une épaisseur dans l'intervalle d'environ 20 nm à environ 600 nm ; et à introduire ce substrat (16), cette sous-couche (20) et un récepteur (74) constitué d'une matière d'enregistrement magnétique, dans une chambre de dépôt sous vide (52) en atmosphère de gaz inerte, sous une pression dans l'intervalle de 0,13 à 4 Pa (1 à 30 millitorr), pour déposer par pulvérisation une couche d'enregistrement cristalline (22) de cette matière d'enregistrement magnétique sur cette sous-couche à une vitesse de 2 nm par seconde au maximum, sous une épaisseur dans l'intervalle de 30 nm à 100 nm, cette couche d'enregistrement (22) reproduisant pratiquement la structure cristalline de cette sous-couche (20), cette matière de sous-couche (20) étant constituée en grande partie d'au moins un des éléments suivants : chrome, molybdène, tungstène, bismuth, niobium, tantale, vanadium et titane, et cette couche d'enregistrement (22) étant constituée d'un des alliages suivants :

a) cobalt jusqu'à 95 atomes pour cent, chrome de 5 à 18 atomes pour cent, et un troisième constituant de 1 à 20 atomes pour cent, consistant en au moins un des éléments suivants : tungstène, tantale, molybdène, vanadium, niobium, platine, bismuth, zirconium et hafnium ;

b) cobalt jusqu'à 93 atomes pour cent, nickel dans l'intervalle de 5 à 40 atomes pour cent, et un troisième constituant de 2 à 20 atomes pour cent, consistant essentiellement en au moins un des éléments suivants chrome, tantale, tungstène, zirconium et platine ; et

c) cobalt et de 2 à 35 atomes pour cent d'un second constituant consistant essentiellement en au moins un des éléments suivants : samarium, yttrium, chrome, nickel, sélénium et tungstène.

7. Procédé selon la revendication 6, caractérisé en ce que cette température initiale de ce substrat (16) est d'au plus 100°C.

8. Procédé selon les revendications 6 et 7, caractérisé en ce que cette couche d'enregistrement (22) est constituée de cobalt, de nickel et de chrome, le chrome représentant de 2 à 10 atomes pour cent de la matière d'enregistrement, cette couche d'enregistrement étant déposée sous une épaisseur de 55 nm.

9. Procédé selon l'une quelconque des revendications 6 à 8, caractérisé en ce que ce gaz inerte est l'argon, en ce que cette étape de dépôt de cette sous-couche (20) comprend une pulvérisation par magnétron en courant continu de chrome dans une atmosphère d'argon à une vitesse de 1 à 5 nm par seconde, et en ce que cette étape de dépôt de la couche d'enregistrement (22) comprend une pulvérisation par magnétron en courant continu de la couche d'enregistrement à une vitesse de 0,5 à 2 nm par seconde.

FIG.1

FIG.2
(PRIOR ART)

FIG.3

FIG.4

FIG. 5

FIG. 6

FIG. 7

FIG. 8

FIG. 9

FIG.10